(19) **Europäisches Patentamt / European Patent Office / Office européen des brevets**

(11) **EP 4 660 736 A1**

(12) **DEMANDE DE BREVET EUROPEEN**

(43) Date de publication:
**10.12.2025 Bulletin 2025/50**

(21) Numéro de dépôt: **25180206.2**

(22) Date de dépôt: **02.06.2025**

(51) Classification Internationale des Brevets (IPC):
**G05D 1/246** *(2024.01)* **G05D 1/46** *(2024.01)*

(52) Classification Coopérative des Brevets (CPC):
**G05D 1/644; G01C 21/00; G05D 1/2464; G05D 1/2465; G05D 1/46; G05D 1/689;** G05D 2109/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **04.06.2024 FR 2405847**

(71) Demandeur: **THALES**
**92190 Meudon (FR)**

(72) Inventeurs:
- **GAYRAUD, Lionel**
  **91767 Palaiseau (FR)**
- **THIRIET, Aurélien**
  **33700 Mérignac (FR)**
- **BARRERE, Rémi**
  **91767 Palaiseau (FR)**

(74) Mandataire: **Lavoix**
**2, place d'Estienne d'Orves**
**75441 Paris Cedex 09 (FR)**

(54) **PROCÉDÉ ET DISPOSITIF DE GÉNÉRATION DE TRAJECTOIRE D'UN APPAREIL MOBILE ENTRE UN POINT DE DÉPART ET UN POINT DE DESTINATION**

(57) Ce procédé de génération de trajectoire comporte l'attribution (52), à chaque point d'un maillage tridimensionnel, d'une pluralité de couloirs, chaque couloir correspondant à un angle solide d'arrivée en ce point, et ayant un indice de couloir associé, formant un ensemble de nœuds réguliers, chaque nœud régulier étant associé à un point du maillage et un indice de couloir ; pour le point de destination, le calcul (54) d'un indice de couloir de destination en fonction d'un cap et d'une pente d'arrivée ;

la détermination (60), par un algorithme de minimisation de coûts, d'une succession de nœuds de l'ensemble de nœuds réguliers, entre un nœud de liaison de départ associé au point de départ et un nœud de liaison de destination associé au point de destination et au couloir de destination, et la formation (62) d'une trajectoire à partir des points de ladite succession de nœuds.

FIG.3

**Description**

La présente invention concerne un procédé de génération de trajectoire d'un appareil mobile entre un point de départ et un point de destination. L'invention concerne également un dispositif associé, et un produit programme d'ordinateur associé.

L'invention se situe dans le domaine de la commande de déplacement d'appareils mobiles, par exemple aériens, marins ou sous-marins, et en particulier de la génération de trajectoires de déplacement des appareils mobiles qui respectent des contraintes de cap et de pente d'arrivée au point de destination.

Le besoin de génération de trajectoires existe pour la réalisation de missions par de tels appareils mobiles, la génération de trajectoire étant réalisée d'une part lors d'une phase de planification d'une mission à effectuer par un ou plusieurs appareils mobiles, ou de manière dynamique en cours de réalisation d'une mission, en cas de modification de certaines conditions de la mission, nécessitant une modification des paramètres et donc un nouveau calcul de trajectoires.

L'invention s'applique avec divers types de mission, civiles ou militaires.

Par exemple dans le cadre d'une mission de prise de vue, à réaliser par un drone, il est intéressant de définir une position et une orientation optimisant la prise de vue, ce qui se traduit par un cap et une pente d'arrivée en un point de destination, qui est un point spatial ayant des coordonnées dans un référentiel spatial.

Par la suite, le terme point désigne un point dans l'espace, défini par des coordonnées dans un référentiel spatial tridimensionnel.

On connaît des méthodes de génération de trajectoire (ou de chemin), pour divers types de mobiles, passant par une succession de points d'un maillage prédéterminé d'un espace à parcourir, la trajectoire étant calculée de manière à minimiser un coût global, le coût global incluant la distance et d'autres éventuelles contraintes par exemple à des conditions naturelles (reliefs, courants, météo) ou à des conditions externes imposées (e.g. zones de passage, zones à éviter, ou zones à survoler pour un aéronef).

On connaît notamment des algorithmes de recherche d'un chemin optimisé, par exemple au sens d'une distance, dans un graphe dont les noeuds représentent des points de passage, la succession des points de passage formant le chemin.

Par exemple, les documents US 2021/025716 A1 et US 2008/091340 A1 décrivent des procédés de génération de trajectoire optimisée.

Par exemple, l'algorithme A* a été utilisé à cet effet, ainsi qu'une version améliorée appelée « A* clairsemé » (en anglais « sparse A* »), comme proposé dans l'article « A novel real-time penetration path planning algorithm for stealth UAV in 3D complex dynamic environment » de Z. Zhang et al, IEEE Access, juillet 2020.

Cependant, les méthodes connues ne permettent pas d'imposer un cap et une pente d'arrivée en un point, et notamment au point de destination, alors que dans de nombreuses applications pratiques, il est intéressant d'être en mesure de générer des trajectoires respectant de telles contraintes supplémentaires dans l'espace. Comme expliqué ci-dessus, en fonction de la mission à accomplir, il peut s'avérer critique d'imposer un cap d'arrivée et une pente d'arrivée, en plus du point spatial de destination, ce qui revient à imposer des contraintes en cinq dimensions. Outre les conditions de mission, la pente réalisable par un appareil mobile peut être contrainte dans une plage donnée par des contraintes techniques (e.g. limites techniques de l'appareil mobile) et par des contraintes de confort du pilote.

L'invention a pour objet de remédier aux inconvénients de l'état de la technique en proposant un procédé et un dispositif de génération de trajectoire dans un espace tridimensionnel, et plus particulièrement en présence de contraintes de cap et de pente, au moins au point de destination.

A cet effet, l'invention a pour objet un procédé de génération de trajectoire d'un appareil mobile entre un point de départ et un point de destination, chacun des points de départ et de destination ayant une position dans un référentiel tridimensionnel, la trajectoire étant définie par une succession de points intermédiaires faisant partie d'un maillage tridimensionnel, le procédé étant mis en œuvre par un processeur d'un dispositif de calcul programmable. Ce procédé comporte des étapes de :

- former un ensemble de nœuds réguliers en attribuant à chaque point du maillage tridimensionnel une pluralité de couloirs, chaque couloir correspondant à un angle solide d'arrivée en ce point, et ayant un indice de couloir associé, chaque nœud régulier étant associé à un point du maillage et un indice de couloir,
- pour le point de destination, obtenir un cap d'arrivée et une pente d'arrivée associés et calculer un indice de couloir de destination en fonction dudit cap d'arrivée et de ladite pente d'arrivée,
- déterminer, par un algorithme de minimisation de coût total de parcours, une succession de nœuds de l'ensemble de nœuds réguliers, entre un nœud de liaison de départ associé au point de départ et un nœud de liaison de destination associé au point de destination et au couloir de destination, et
former une trajectoire à partir des points de ladite succession de nœuds.

Avantageusement, l'utilisation d'une pluralité de couloirs associés à chaque point, chaque couloir correspondant à un angle solide d'arrivée en ce point, permet d'imposer une contrainte sur le cap et la pente d'arrivée, notamment au point de destination. Grâce à l'association d'un indice de couloir à chaque couloir, et à la formation de nœuds réguliers, le calcul d'une trajectoire minimisant un coût global à partir d'un ensemble de nœuds réguliers est réalisable. En d'autres termes, le coût calculatoire est contrôlé, et l'explosion combinatoire est évitée.

Le procédé de génération de trajectoire d'un appareil mobile entre un point de départ et un point de destination peut également présenter une ou plusieurs des caractéristiques ci-dessous, prises indépendamment ou selon toutes les combinaisons techniquement envisageables.

Le procédé comporte en outre, préalablement à l'étape de détermination, une étape d'ajout à l'ensemble de nœuds réguliers d'au moins un nœud de liaison de départ, le nœud de liaison de départ ayant un point du maillage associé situé dans un voisinage du point de départ.

L'étape de détermination met en œuvre des itérations pour déterminer, à partir d'un nœud à traiter choisi, un nœud successeur du nœud à traiter choisi, le nœud successeur étant associé à un point successeur faisant partie d'un voisinage du point spatial associé au nœud à traiter et à un couloir d'indice calculé en fonction d'une direction d'accès audit point successeur en partant du point spatial associé au nœud à traiter.

Le nœud à traiter ayant un nœud prédécesseur préalablement déterminé, l'étape de détermination met en œuvre une vérification de condition de distance, la condition de distance comportant une comparaison entre une distance estimée parcourue entre le nœud successeur et le point de départ et un coût de trajectoire de transition entre le point spatial prédécesseur associé au nœud prédécesseur, le point spatial associé au nœud à traiter et le point spatial associé audit nœud successeur.

Le procédé comporte, lorsque la condition de distance est vérifiée, une mise à jour de la distance estimée parcourue entre le nœud successeur et le point de départ, et une mise à jour d'une distance estimée à parcourir entre ledit nœud successeur et le point de destination.

La mise à jour de la distance estimée à parcourir entre ledit nœud successeur et le point de destination met en œuvre une heuristique de distance.

Le procédé comporte en outre une étape de sélection d'un ensemble de points de sortie, les points de sortie étant des points du maillage prédéterminé situés à une distance inférieure ou égale à une distance prédéterminée du point de destination.

Le procédé comporte, lorsque le point de destination n'appartient pas au maillage, une étape de détermination d'au moins un nœud de liaison de destination associé à un point de sortie ou à un point spatial d'un des nœuds prédécesseurs d'un point de sortie parmi un nombre prédéterminé de nœuds prédécesseurs successifs d'un point de sortie

Selon un autre aspect, l'invention concerne un dispositif de génération de trajectoire d'un appareil mobile entre un point de départ et un point de destination, chacun des points de départ et de destination ayant une position dans un référentiel tridimensionnel, la trajectoire étant définie par une succession de points intermédiaires faisant partie d'un maillage tridimensionnel. Le dispositif comporte un processeur configuré pour mettre en oeuvre :

- un module configuré pour former un ensemble de nœuds réguliers, en attribuant à chaque point du maillage tridimensionnel une pluralité de couloirs, chaque couloir correspondant à un angle solide d'arrivée en ce point, et ayant un indice de couloir associé, chaque nœud régulier étant associé à un point du maillage et un indice de couloir,
- un module d'obtention, pour le point de destination, d'un cap d'arrivée et d'une pente d'arrivée associés et de calcul d'un indice de couloir de destination en fonction dudit cap d'arrivée et de ladite pente d'arrivée,
- un module de détermination, par un algorithme de minimisation de coût total de parcours, une succession de nœuds réguliers de l'ensemble de nœuds réguliers, entre un nœud de liaison de départ associé au point de départ et un nœud de liaison de destination associé au point de destination et au couloir de destination, et
- un module de formation d'une trajectoire à partir des points de ladite succession de nœuds

Selon un autre aspect, l'invention concerne un programme d'ordinateur comportant des instructions logicielles qui, lorsqu'elles sont mises en œuvre par un dispositif électronique programmable, mettent en œuvre un procédé de génération de trajectoire d'un appareil mobile entre un point de départ et un point de destination pour réaliser une mission tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

la figure 1 illustre schématiquement un système de guidage d'appareil mobile comprenant un dispositif de génération de trajectoire(s) selon un mode de réalisation ;
la figure 2 illustre schématiquement un maillage de points en deux dimensions et un couloir associé à un point P ;
la figure 3 est un logigramme des principales étapes d'un procédé de génération de trajectoire(s) selon un mode de réalisation ;

la figure 4 illustre schématiquement un point de départ et une pluralité de points de liaison de départ associés;

la figure 5 illustre schématiquement un point de destination et une pluralité de points de liaison associés;

la figure 6 est un logigramme des principales étapes de la détermination des noeuds de trajectoire selon un mode de réalisation ;

la figure 7 est un logigramme des principales étapes de la détermination des noeuds de liaison de sortie selon un mode de réalisation.

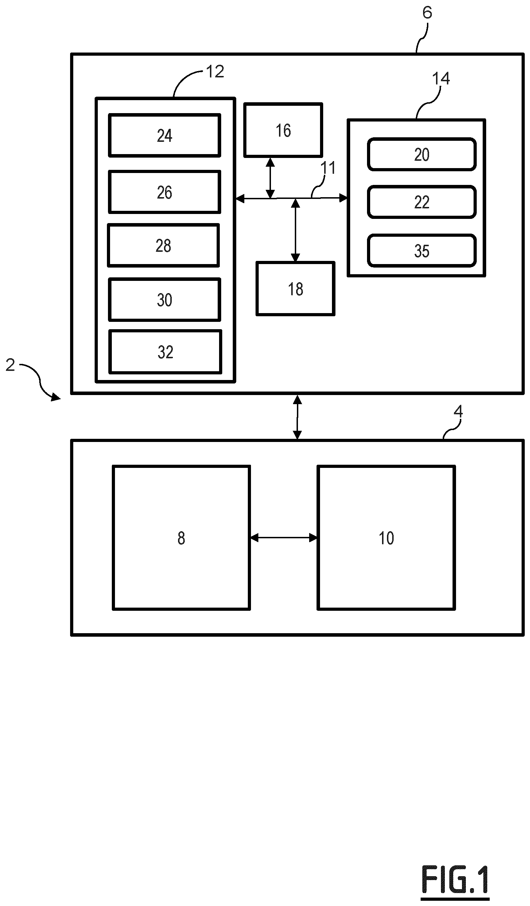

La figure 1 illustre schématiquement un exemple de système de guidage 2 d'appareil mobile 4 dans lequel l'invention est appliquée.

L'appareil mobile 4 est par exemple un aéronef, de type avec ou sans pilote à bord, et plus particulièrement un appareil mobile 4 sans pilote à bord ou drone.

L'appareil mobile a des contraintes de déplacement, qui sont soit dues à des limitations mécaniques ou aérodynamiques, soit dues à des limitations d'acceptabilité pour le pilote ou pour la mission effectuée.

Dans le système de guidage 2, l'appareil mobile 4 reçoit des commandes de guidage d'un dispositif de génération de trajectoire 6, qui est un dispositif électronique programmable.

Par exemple, le dispositif de génération de trajectoire 6 est situé dans un centre de calcul au sol, et les commandes de guidage sont communiquées à l'appareil mobile 4 via une liaison de communication sans fil. En variante, le dispositif de calcul 6 est embarqué par l'appareil mobile 4.

Le dispositif de génération de trajectoire 6 est configuré pour calculer une ou plusieurs trajectoires selon le procédé de génération de trajectoire décrit plus en détail ci-après.

Par exemple, la génération de trajectoires est effectuée dans le cadre d'une planification de mission de l'appareil mobile 4.

La planification de mission implique la prise en considération de nombreuses contraintes de fonctionnement et d'environnement.

Selon une variante, la génération de trajectoire(s) est effectuée dynamiquement en cours de mission, suite à un changement de conditions de mission.

Le dispositif de génération de trajectoire 6 est configuré pour générer une trajectoire ou plusieurs trajectoires, pour un appareil mobile.

Dans un mode de réalisation, une trajectoire est générée entre un point de départ et un point de destination, avec des contraintes prédéterminées de cap d'arrivée et/ou de pente d'arrivée au point de destination.

Dans un autre mode de réalisation, plusieurs trajectoires sont générées entre un point de départ et plusieurs points de destination avec des contraintes prédéterminées de cap d'arrivée et de pente d'arrivée au point de destination, ou un seul point de destination mais plusieurs contraintes prédéterminées de cap d'arrivée et de pente d'arrivée au point de destination.

La présence de contraintes de cap d'arrivée et/ou de pente d'arrivée au point de départ et/ou de destination n'est pas nécessaire.

Il est entendu que le dispositif de génération de trajectoire 6 est configuré pour générer une ou plusieurs trajectoires, entre un ou plusieurs points de départ et un ou plusieurs points de destination.

Par la suite, la description de la génération d'une trajectoire entre un point de départ et un point de destination sera décrite plus en détail, étant clair qu'il n'y a pas de difficulté à réaliser la génération de multiples trajectoires en appliquant le procédé décrit ci-après.

Une trajectoire est définie par une liste de points de passage, les points étant définis par des coordonnées spatiales dans un référentiel spatial tridimensionnel donné, et par un tracé, par exemple modélisable par des droites/-courbes, entre les points successifs.

L'appareil mobile 4 comprend notamment un ordinateur de bord 8 et un système de commande du mouvement 10. Par exemple, l'ordinateur de bord 8 transforme la trajectoire en commandes de guidage, par exemple des commandes d'accélérations longitudinales, mouvements de gouverne etc. qui sont transmises au système de commande de mouvement 10.

Le dispositif de génération de trajectoire 6 est par exemple un système informatique composé d'un ou plusieurs dispositifs électroniques programmables, i.e. des ordinateurs.

Pour simplifier l'explication, on considère que le dispositif de génération de trajectoire 6 est un dispositif électronique programmable comportant un processeur 12 et une unité de mémoire électronique 14, une interface de communication 16 et une interface homme-machine 18, adaptés à communiquer via un bus de communication 11.

L'unité de mémoire électronique 14 est configurée pour mémoriser un maillage tridimensionnel 20, par exemple régulier, et une carte de coûts 22 associée au maillage 20 et préalablement calculée.

Par exemple chaque maille régulière est un cube de côté d prédéterminé, dont les coins sont des points spatiaux du maillage, pris en considération pour former la ou les trajectoires.

Par exemple, la carte de coûts associe un coût de traversée à chaque transition entre mailles du maillage tridimensionnel 20, le coût prenant en compte des contraintes (par exemple relief ou menaces).

Le processeur 12 est configuré pour mettre en œuvre :

- un module 24 d'attribution, à chaque point de maillage, d'une pluralité de couloirs, chaque couloir correspondant à un angle solide d'arrivée en ce point, et ayant un indice de couloir associé, formant une pluralité de nœuds réguliers ;
- un module 26 de calcul d'un indice de couloir de destination associé au point de destination, en fonction d'un cap d'arrivée et d'une pente d'arrivée au point de destination donnés ;
- un module 28 de détermination par un algorithme de minimisation de coût total de parcours, d'une succession de nœuds réguliers, entre un nœud de liaison de départ et un nœud de liaison de destination associé au point de destination et au couloir de destination et
- un module 30 de formation d'une trajectoire 35 à partir des points de ladite succession de nœuds.

Le module 26 est configuré pour former un ensemble de nœuds réguliers en attribuant à chaque point du maillage tridimensionnel une pluralité de couloirs, chaque couloir correspondant à un angle solide d'arrivée en ce point, et ayant un indice de couloir associé, chaque nœud régulier étant associé à un point du maillage tridimensionnel et un indice de couloir.

Optionnellement, le processeur 12 est en outre configuré pour mettre en œuvre un module 32 de génération de nœuds de liaison de départ et de destination.

La ou chaque trajectoire calculée 35 est mémorisée dans l'unité de mémoire électronique et optionnellement affichée sur une interface homme-machine (non représentée).

Les modules 24, 26, 28, 30, 32 sont adaptés à coopérer, comme décrit plus en détail ci-après, pour mettre en œuvre le procédé de génération de trajectoire d'un appareil mobile entre un point de départ et un point de destination selon l'invention.

Dans un mode de réalisation, les modules 24, 26, 28, 30, 32 sont réalisés sous forme d'instructions logicielles formant un programme d'ordinateur, qui, lorsqu'il est exécuté par un ordinateur, met en œuvre un procédé de génération de trajectoire selon l'invention.

En variante non représentée, les modules 24, 26, 28, 30, 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

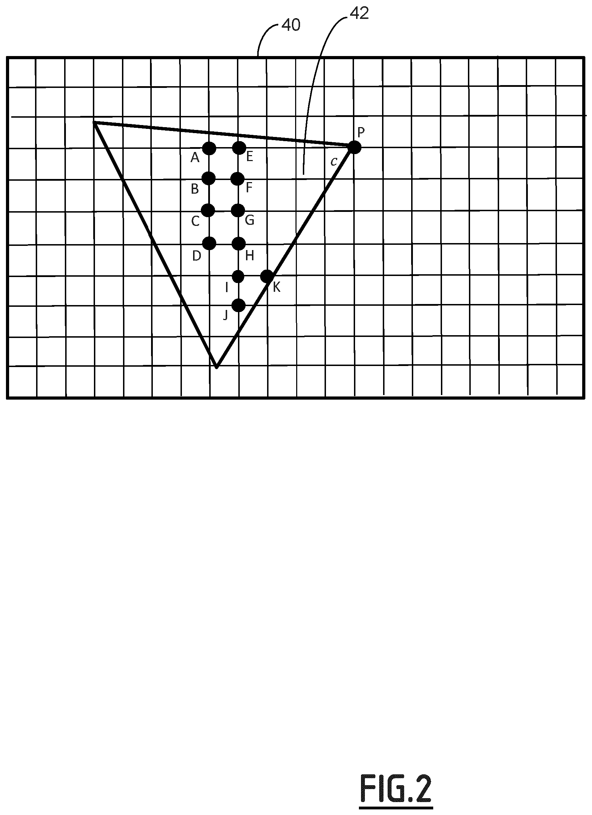

La figure 2 illustre schématiquement, dans un plan, un maillage bidimensionnel régulier 40, dont les mailles sont carrées, dont les coins sont les points appartenant au maillage bidimensionnel 40, comportant un point P et un couloir Cor(c) d'arrivée au point P, référencé par la référence 42.

Il est clair que la représentation de la figure 2 est une projection dans un plan d'un maillage tridimensionnel et d'un couloir tridimensionnel (angle solide). Le maillage 40 est donc une représentation en 2D d'un maillage tridimensionnel 20.

Les points A, B, C, D, E, F, G, H, I, J, K sont des points du maillage 40, qui sont situés dans une plage de distances donnée du point P, ou en d'autres termes dans un voisinage de P et permettant une arrivée au point P dans le couloir Cor(c).

Le voisinage d'un point P du maillage est formé par les points du maillage situés à une distance de L$\pm\delta$ du point P, la marge $\delta$ pouvant être égale à 0.

Par exemple, si L=d, d étant le pas du maillage régulier, $\delta$=0.

Pour réaliser par la suite une recherche de trajectoire de coût optimisé, la distance L est choisie de préférence supérieure à d, de manière à réduire la combinatoire calculatoire.

Le choix de la valeur L dépend des contraintes liées à la manœuvrabilité de l'appareil mobile, par exemple L est compris entre 3 et 5 fois le rayon de virage minimal de l'appareil mobile.

De manière systématique, on définit pour chaque point P du maillage, une pluralité de couloirs associés, chaque couloir formant un angle solide d'arrivée au point P.

En d'autres termes, les portions de sphère d'arrivée en un point P sont discrétisées en $N_a$x$N_p$ couloirs, où $N_a$ désigne un nombre d'intervalles d'azimut et $N_p$ le nombre d'intervalles de pente ou d'élévation.

Pour une direction donnée, le cap est associé à un angle d'azimut et la pente est associée à un angle d'élévation.

Lorsque l'appareil mobile arrive en un point P dans une direction représentée par un vecteur $\overrightarrow{DP}(dx,dy,dz)$, qui est le vecteur de transition d'un point prédécesseur de P vers le point P, l'angle d'azimut correspondant $\alpha$ est calculé par :
[MATH 1]

- Si $dx = dy = 0$, $\alpha = 0$
- Sinon :

  ○ Si $dy = 0$

  ▪ $\alpha = \dfrac{\pi}{2}$ si $dx \geq 0$

  ▪ $\alpha = -\dfrac{\pi}{2}$ $\alpha$ sinon

  ○ Si $dy \neq 0$ , $\alpha$ = atan 2 ($dx/dy$)

Où atan() désigne la fonction arctangente.

L'angle d'élévation correspondant $\varepsilon$ est calculé par :
[MATH 2]

- Si $dx = dy$ 0,

  ▪ $\varepsilon = \dfrac{\pi}{2}$ si $dz \geq 0$

  ▪ $\varepsilon = -\dfrac{\pi}{2}$ sinon

  $$\varepsilon = \mathrm{atan}\left(\frac{dz}{\sqrt{dx^2 + dy^2}}\right)$$
- Sinon

Ensuite à partir des angles respectifs d'azimut et d'élévation, des indices associés sont calculables.

En effet, considérant une plage de $[0,2\pi]$ pour les angles d'azimut, cette plage est divisée en N$a$ intervalles de même largeur $d\alpha$:

[MATH 3]

$$d\alpha = \frac{2\pi}{N_a}$$

**L'indice** $i_\alpha$ correspondant à un angle d'azimut $\alpha$ est calculé par :

[MATH 4]

$$i_\alpha = E\left(\frac{\alpha}{d\alpha}\right)$$

Où E() est l'opérateur « partie entière ».

En considérant une plage d'angles d'élévation comprise entre une valeur de pente minimale $p_{min}$ et une valeur de pente maximale $p_{max}$, la plage étant divisée en $N_p$ intervalles de même longueur, on définit :

[MATH 5]

$$dp = \frac{p_{max} - p_{min}}{N_p}$$

L'indice $i_\varepsilon$ correspondant à un angle d'élévation $\varepsilon$ est calculé par :

**6**

[MATH 6]

$$i_\varepsilon = E\left(\frac{\varepsilon - p_{min}}{dp}\right)$$

Ainsi, au vecteur $\overrightarrow{DP}$(dx,dy,dz) d'arrivée en un point P est associé un couloir d'indices respectifs d'azimut $i_\alpha$ et d'élévation $i_\varepsilon$.

Un indice de couloir c est calculé par la formule :

[MATH 7]

$$c = i_\alpha \times N_p + i_\varepsilon$$

Un indice de couloir c unique est associé de manière bijective à une paire d'indices respectifs d'azimut $i_\alpha$ et d'élévation $i_\varepsilon$, connaissant $N_a$ et $N_p$.

Le nombre total de couloirs d'arrivée en un point P donné est de : $N_c = N_a \times N_p$.

Ainsi, à chaque point d'un maillage de points prédéterminé, chaque point ayant des coordonnées spatiales dans le référentiel 3D, on associe $N_c$ couloirs.

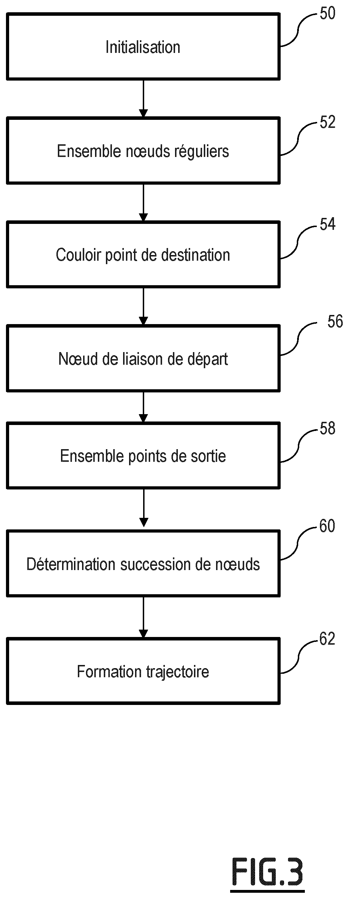

La figure 3 est un synoptique des principales étapes d'un procédé de génération de trajectoire d'un appareil mobile entre un point de départ et un point de destination, selon un mode de réalisation.

Le procédé reçoit en entrée des paramètres (étape d'initialisation 50), qui sont respectivement un maillage tridimensionnel de l'espace dans lequel évolue l'appareil mobile, une carte de coûts associée, une distance L définissant un voisinage pour la recherche de points successifs de la trajectoire, des valeurs de pente minimale $p_{min}$ et maximale $p_{max}$, et des valeurs $N_a$, $N_p$ de discrétisation des couloirs d'arrivée en chaque point.

De plus, les coordonnées spatiales des points de départ D1 et de destination D2, une pente d'arrivée P_dest et un cap d'arrivée Cap_dest au point de destination. Pour le point de départ, un cap et une pente associés sont définis.

Le procédé comporte une étape 52 de formation d'un ensemble nœuds réguliers, comportant l'attribution à chaque point du maillage tridimensionnel d'un nombre $N_c$ de couloirs, chaque couloir correspondant à un angle solide d'arrivée en ce point, et ayant un indice de couloir associé. Chaque nœud régulier est associé à un point du maillage et un indice de couloir.

Pour $N_m$ points du maillage et $N_c$ indices de couloirs, on obtient $N_m$x$N_c$ nœuds réguliers.

Le calcul de trajectoire se fera sur l'ensemble des nœuds réguliers, prenant en compte à la fois la position spatiale des points et les indices de couloir associés.

Le procédé comprend en outre une étape 54 de calcul d'un indice de couloir associé au point de destination, dit indice de couloir de destination.

Le procédé comprend en outre une étape 56, d'ajout d'au moins un nœud de liaison de départ. Lorsque le point de départ D1 appartient au maillage, le nœud de liaison de départ est associé au point de départ. Lorsque le point de départ D1 n'appartient pas au maillage, l'étape 56 comprend plusieurs sous-étapes.

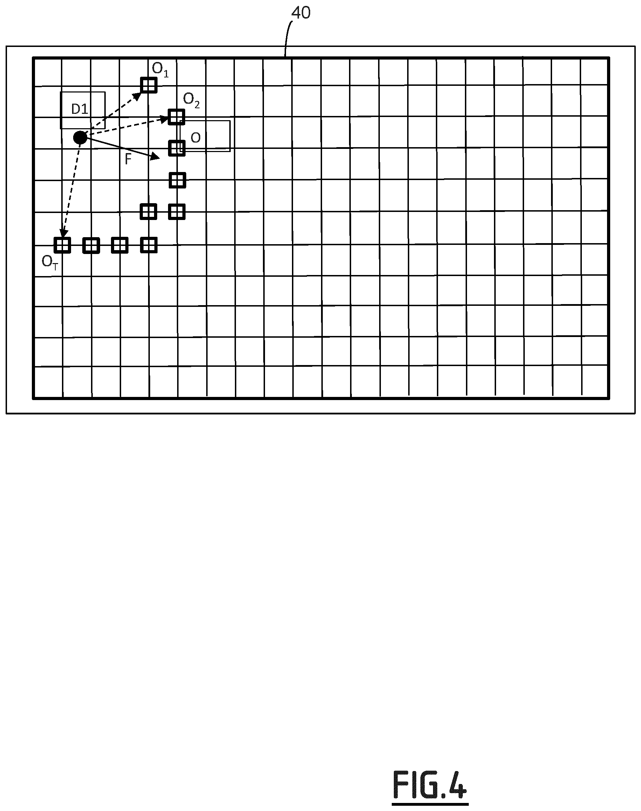

La figure 4 illustre schématiquement un cas de figure dans lequel le point de départ D1 n'est pas un point du maillage régulier prédéfini.

Il est avantageux de ne pas recalculer un maillage dans un tel cas de figure.

Ainsi, dans un mode de réalisation, un des points du maillage, référencé O dans la figure 4, est sélectionné. Le point O est un point du voisinage du point de départ D1, i.e. situé à une distance proche de la distance L de D1. Par exemple, le point O est le point du voisinage de D1 situé dans la direction la plus proche de la direction de départ souhaitée, indiquée par la flèche F dans la figure 4.

Le nœud formé par le point O et l'indice de couloir c calculé en fonction de la direction F est le nœud de liaison de départ lors ajouté dans l'ensemble de nœuds régulier.

En l'absence de direction de départ souhaitée, à l'étape 56, plusieurs nœuds de liaison de départ sont ajoutés, correspondant à tous les points du voisinage $O_1$, $O_2$,...$O_T$ du point de départ D1, avec les indices de couloir associés, chacun de ces nœuds de liaison de départ correspondant à possible départ de trajectoire à explorer.

Le procédé comprend en outre une étape 58 optionnelle d'ajout de points dits points de sortie. L'étape 58 est mise en œuvre lorsque le point de destination D2 n'appartient pas au maillage prédéterminé.

Les points de sortie sont des points S, par exemple tous les points du maillage situés à une distance inférieure ou égale à une distance $d_S$ prédéterminée du point de destination D2.

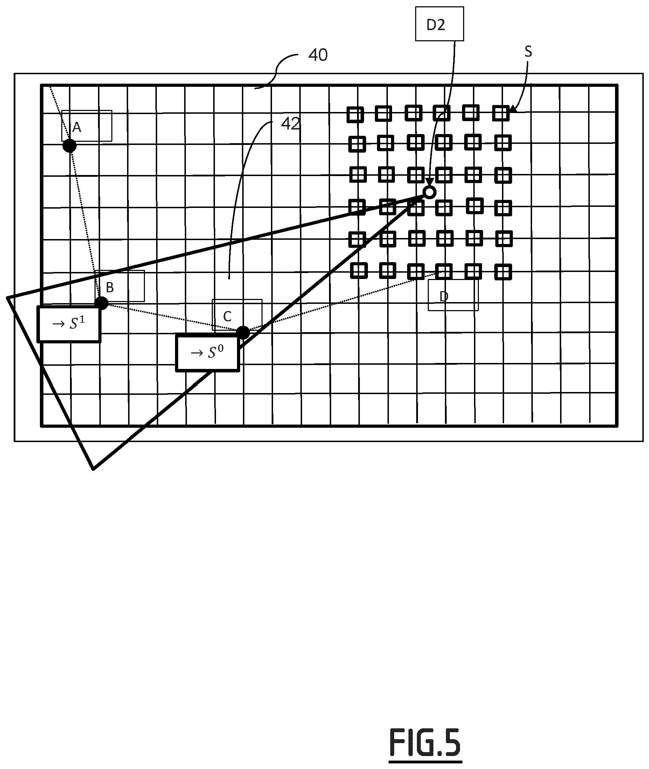

Dans la figure 5 est illustré schématiquement un point de destination D2 qui n'est pas un des points du maillage prédéterminé 40, et des points S qui sont des points de sortie autour du point de destination D2, situés, dans l' à une distance inférieure ou égale à $3 \times d$, d étant le pas du maillage régulier, formant un carré de 6x6 points de sortie autour du point de destination D2 dans cet exemple.

L'utilisation des points de sortie sera décrite plus en détail ci-après.

Le procédé met alors en œuvre une étape 60 de détermination, par un algorithme de minimisation de coût total de parcours, d'une succession de nœuds réguliers, entre un nœud de liaison associé au point de départ et un nœud de liaison associé au point de destination.

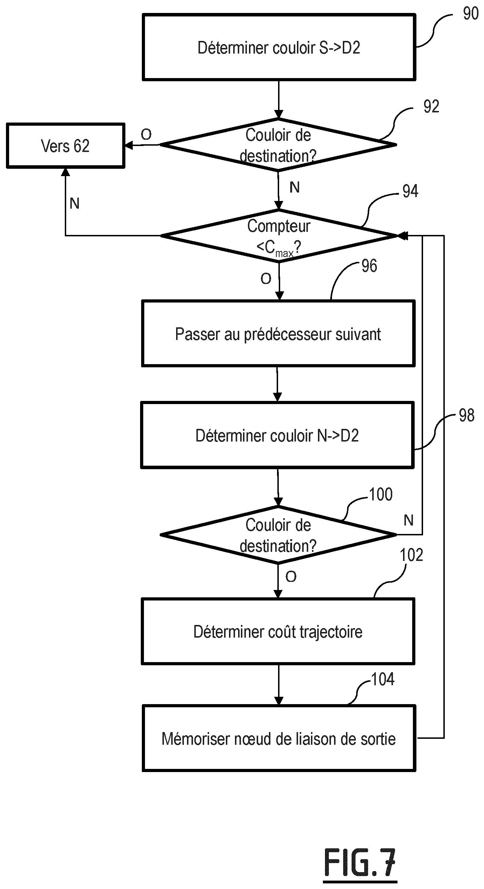

Un mode de réalisation de la détermination d'un nœud de liaison associé au point de destination ou nœud de liaison de destination sera décrit ci-après en référence à la figure 7.

L'algorithme de minimisation de coût total de parcours met en œuvre une fonction associant à point spatial une borne minimale de coût intégré total restant à parcourir jusqu'au point de destination, une telle fonction étant également appelée « heuristique de distance ».

Dans un mode de réalisation, l'heuristique de distance utilisée est la distance à vol d'oiseau (en ligne droite) entre le point considéré et le point de destination, en la multipliant par un coût linéïque minimal tenant compte des contraintes dynamiques et des éventuels obstacles.

En variante, d'autres stratégies sont envisageables, par exemple tenant compte du rayon absolu de virage, comme cela a été proposé dans l'article « Enhanced sparse A* search for UAV path planning using Dubins path estimation » de Z. Wang et al, 2014, IEEE.

Le procédé comprend enfin une étape 62 de formation d'une trajectoire à partir des points de ladite succession de nœuds.

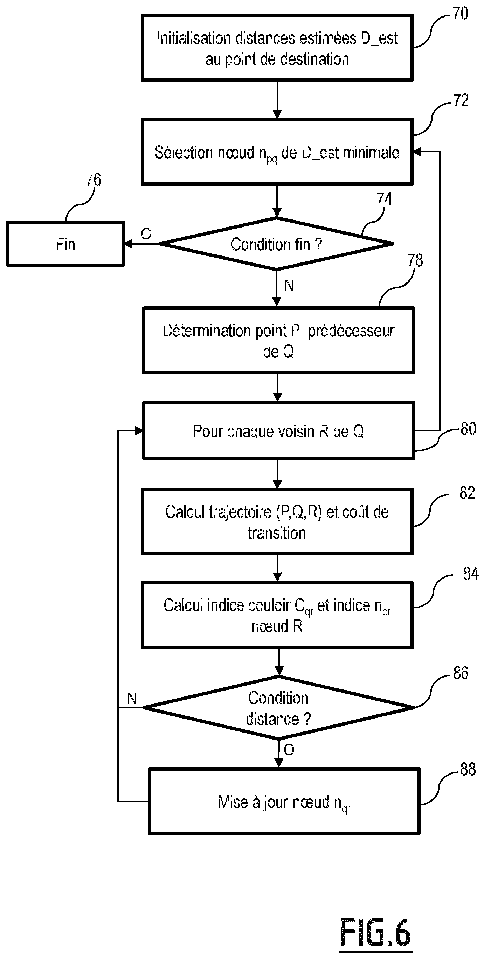

Un mode de réalisation de l'étape 60 sera décrit ci-après en référence aux figures 6 et 7.

La figure 6 illustre un mode de réalisation d'un algorithme de minimisation d'un coût total de parcours dans un ensemble de noeuds comportant des nœuds réguliers et un nœud de liaison de départ, mettant en œuvre une recherche clairsemée.

Le procédé comporte une étape 70 d'initialisation, dans laquelle pour chaque nœud régulier, une distance estimée D_est au point de destination, également appelée distance estimée à parcourir, est initialisée à une valeur maximale, et la distance estimée au point de destination associée au nœud de liaison de départ est initialisée par l'heuristique de distance choisie.

Le procédé comprend ensuite une boucle de parcours de tous les nœuds de l'ensemble de nœuds jusqu'à ce qu'une condition de fin de boucle soit vérifiée.

Ainsi, le procédé comprend une étape 72 de sélection d'un nœud d'indice $n_{pq}$, dit nœud à traiter, correspondant à un point spatial Q et ayant un couloir d'indice $C_{pq}$ associé, dont la distance estimée D_est au point de destination est la plus faible.

Il est ensuite vérifié si une condition de fin est validée (étape 74), la condition de fin étant validée si le nœud à traiter est un nœud associé au point de destination ou si tous les autres nœuds de l'ensemble de nœuds ont été traités.

Si la condition de fin est validée, l'étape 74 est suivie d'une étape de fin 76.

Si la condition de fin n'est pas validée, l'étape 74 est suivie d'une étape 78 de détermination du nœud prédécesseur du nœud d'indice $n_{pq}$, et en particulier du point spatial P prédécesseur du point spatial Q.

Pour chaque point R voisin de Q, dit point successeur de Q, le voisinage étant défini par la distance L prédéterminée (étape 80), le procédé comprend un calcul 82 d'une trajectoire de transition entre les points P, Q et R, notée [P,Q,R] et d'un coût de la transition [P,Q,R], noté Cost_PQR. Si la trajectoire de transition n'est pas acceptable, le voisin suivant est sélectionné.

Si la trajectoire de transition est acceptable, le calcul 82 est suivie d'une étape 84 de calcul d'un indice de couloir de la transition de Q vers R, noté $C_{qr}$ et d'un indice de nœud associé.

Par exemple, l'indice de nœud est calculé en fonction d'un indice r du point R dans le maillage prédéterminé et de l'indice de couloir $C_{qr}$ par la formule :

[MATH 8]

$$n_{qr} = r \times N_c + C_{qr}$$

Le procédé comprend ensuite une vérification 86 d'une condition de distance.

La condition de distance est :

[MATH 9]

$$Distance(n_{qr}) > Distance(n_{pq}) + Cost\_PQR$$

Le terme Distance() correspond à une estimation de la distance parcourue entre le nœud considéré et le point de départ. Comme indiqué par le calcul ci-dessus, le terme Distance() inclut un coût de transition Cost_PQR (ou coût de parcours).

Si la condition de distance n'est pas vérifiée, l'étape 86 est suive de l'étape 80 préalablement décrite.

Si la condition de distance est vérifiée, le procédé comprend alors une étape 88 de mise à jour du nœud d'indice $n_{rq}$, consistance à mettre à jour sa distance parcourue, par rapport au point de départ :

[MATH 10]

$$Distance(n_{qr}) = Distance(n_{pq}) + Cost\_PQR$$

Le prédécesseur de nœud est mémorisé, il s'agit du nœud d'indice $n_{pq}$ associé au point spatial Q.

La distance estimée à parcourir par rapport au nœud de destination associée est également mise à jour :

[MATH 11]

$$D\_est_{(n_{qr})} = Distance(n_{qr}) + Heuristique(R)$$

Où Heuristique() est la fonction de heuristique de distance préalablement choisie, par exemple la distance à vol d'oiseau au point de destination.

Lorsqu'un point de sortie est atteint, les étapes décrites ci-après en référence à la figure 7 de détermination d'au moins un nœud de liaison de destination sont mises en œuvre.

L'indice de couloir associé au vecteur reliant le point de sortie S et le point de destination est calculé à l'étape 90 et comparé à l'indice de sortie à l'étape 92 pour déterminer si le point de destination D2 est accessible depuis le point de sortie via le couloir de destination préalablement calculé.

Si les indices de couloir sont identiques (i.e. la comparaison 92 est positive), le procédé retourne à l'étape 62 de formation de trajectoire.

En cas de comparaison négative, en d'autres termes si le point de destination D2 n'est pas accessible depuis le point de sortie S, l'étape 92 est suivie d'une boucle (itération 94), jusqu'à ce qu'une variable Compteur, préalablement initialisée à 0, atteigne une valeur $C_{max}$ prédéterminée. Par exemple, $C_{max}=3$, cette valeur indiquant un nombre de nœuds prédécesseurs testés.

La figure 5 illustre un point de sortie D, qui ne permet pas d'atteindre le point de destination D2 via le couloir de destination 42. Par la suite, les prédécesseurs C, B et A sont parcourus afin de sélectionner un nœud de liaison de destination.

En effet, l'étape 94 est suivie d'une étape 96 de passage au point spatial prédécesseur suivant, associé au nœud prédécesseur suivant. Dans l'exemple de la figure 5, le prédécesseur du point de sortie D est le point C, le prédécesseur du point C est le point B et le prédécesseur du point B est le point A.

Nous utilisons la notation générique N pour le prédécesseur suivant, associé à un nœud d'indice de nœud n.

L'indice de couloir $C_{nd2}$ de transition de N vers le point de destination D2 est calculé (étape 98) et comparé à l'indice de couloir de sortie (étape 100). Si les indices de couloir sont distincts, l'étape 100 est suivie de l'étape 94, la variable Compteur étant augmentée.

Si les indices de couloir sont identiques, ou en d'autres termes si le point de destination est atteignable depuis le point spatial N par le couloir de destination, alors l'étape 100 est suivie d'une étape 102 de calcul du coût de la trajectoire de transition $C_{MND2}$ entre le point M prédécesseur de N, le point N et le point D2, et de création et mémorisation (étape 104) d'un nœud de liaison de destination.

Le nœud de liaison de destination a le nœud associé au point N comme prédécesseur, et une distance estimée par rapport au point de départ associée, calculée en fonction du coût de la trajectoire de transition $C_{MND2}$ selon la formule [MATH 10].

L'étape 104 est suivie de l'étape 94, la variable Compteur étant augmentée.

Pour compléter l'explication, en se référant à la figure 5, les points prédécesseurs respectifs C et B sont associés à des nœuds de liaison de sortie $S^0$ et $S^1$, une transition respective depuis C ou B vers le point de destination D2 passant dans le couloir de sortie 42.

Bien entendu, les modes de réalisation décrits ci-dessus ont été décrits à titre d'exemple uniquement, d'autres variantes à la portée de l'homme du métier étant envisageables.

Avantageusement, le procédé proposé permet de calculer des trajectoires sans une augmentation notable de la complexité calculatoire, y compris lorsque le point de départ et/ou le point de destination n'est pas un point du maillage, car le maillage n'est pas recalculé.

Avantageusement, le procédé proposé permet de respecter une contrainte sur le cap et la pente d'arrivée, notamment au point de destination, tout en minimisant le coût total de parcours.

Le dispositif de génération de trajectoire apporte des avantages analogues aux avantages du procédé de génération de trajectoire décrit.

## Revendications

1. Procédé de génération de trajectoire d'un appareil mobile entre un point de départ (D1) et un point de destination (D2), chacun des points de départ et de destination ayant une position dans un référentiel tridimensionnel, la trajectoire étant définie par une succession de points intermédiaires faisant partie d'un maillage tridimensionnel, le procédé étant mis en œuvre par un processeur d'un dispositif de calcul programmable et étant **caractérisé en ce qu'**il comporte des étapes de :

   - former un ensemble de nœuds réguliers en attribuant (52) à chaque point du maillage tridimensionnel une pluralité de couloirs, chaque couloir correspondant à un angle solide d'arrivée en ce point, et ayant un indice de couloir associé, chaque nœud régulier étant associé à un point du maillage tridimensionnel et un indice de couloir,
   - pour le point de destination, obtenir un cap d'arrivée et une pente d'arrivée associés et calculer (54) un indice de couloir de destination en fonction dudit cap d'arrivée et de ladite pente d'arrivée,
   - déterminer (60), par un algorithme de minimisation de coût total de parcours, une succession de nœuds de l'ensemble de nœuds réguliers, entre un nœud de liaison de départ associé au point de départ et un nœud de liaison de destination associé au point de destination et au couloir de destination, et
   - former (62) une trajectoire à partir des points de ladite succession de nœuds.

2. Procédé selon la revendication 1, comportant en outre, préalablement à l'étape de détermination (60), une étape d'ajout à l'ensemble de nœuds réguliers d'au moins un nœud de liaison de départ, le nœud de liaison de départ ayant un point du maillage tridimensionnel associé situé dans un voisinage du point de départ.

3. Procédé selon l'une quelconque des revendications 1 ou 2, dans lequel l'étape de détermination (60) met en œuvre des itérations pour déterminer, à partir d'un nœud à traiter choisi, un nœud successeur du nœud à traiter choisi, le nœud successeur étant associé à un point successeur faisant partie d'un voisinage du point spatial associé au nœud à traiter et à un couloir d'indice calculé en fonction d'une direction d'accès audit point successeur en partant du point spatial associé au nœud à traiter.

4. Procédé selon la revendication 3, dans lequel, le nœud à traiter ayant un nœud prédécesseur préalablement déterminé, l'étape de détermination (60) met en œuvre une vérification (86) de condition de distance, la condition de distance comportant une comparaison entre une distance estimée parcourue entre le nœud successeur et le point de départ et un coût de trajectoire de transition entre le point spatial prédécesseur associé au nœud prédécesseur, le point spatial associé au nœud à traiter et le point spatial associé audit nœud successeur.

5. Procédé selon la revendication 4, comportant, lorsque la condition de distance est vérifiée, une mise à jour (88) de la distance estimée parcourue entre le nœud successeur et le point de départ, et une mise à jour d'une distance estimée à parcourir entre ledit nœud successeur et le point de destination.

6. Procédé selon la revendication 5, dans lequel la mise à jour (88) de la distance estimée à parcourir entre ledit nœud successeur et le point de destination met en œuvre une heuristique de distance.

7. Procédé selon l'une quelconque des revendications 1 à 6, comportant en outre une étape de sélection (58) d'un ensemble de points de sortie, les points de sortie étant des points du maillage tridimensionnel situés à une distance inférieure ou égale à une distance prédéterminée du point de destination.

8. Procédé selon la revendication 7, comportant, lorsque le point de destination n'appartient pas au maillage tridimensionnel, une étape de détermination d'au moins un nœud de liaison de destination associé à un point de sortie ou à un point spatial d'un des nœuds prédécesseurs d'un point de sortie parmi un nombre prédéterminé de nœuds prédécesseurs successifs d'un point de sortie.

9. Programme d'ordinateur comportant des instructions logicielles qui lorsqu'elles sont exécutées par un dispositif électronique programmable, mettent en œuvre un procédé de génération de trajectoire d'un appareil mobile entre un point de départ et un point de destination conforme aux revendications 1 à 8.

10. Dispositif de génération de trajectoire d'un appareil mobile (4) entre un point de départ et un point de destination, chacun des points de départ et de destination ayant une position dans un référentiel tridimensionnel, la trajectoire étant définie par une succession de points intermédiaires faisant partie d'un maillage tridimensionnel, le dispositif comportant un processeur **caractérisé en ce qu'**il est configuré pour mettre en œuvre :

- un module (24) configuré pour former un ensemble de nœuds réguliers en attribuant à chaque point du maillage tridimensionnel une pluralité de couloirs, chaque couloir correspondant à un angle solide d'arrivée en ce point, et ayant un indice de couloir associé, chaque nœud régulier étant associé à un point du maillage tridimensionnel et un indice de couloir,
- un module (26) d'obtention, pour le point de destination, d'un cap d'arrivée et d'une pente d'arrivée associés et de calcul d'un indice de couloir de destination en fonction dudit cap d'arrivée et de ladite pente d'arrivée,
- un module (28) de détermination, par un algorithme de minimisation de coût total de parcours, une succession de nœuds de l'ensemble de nœuds réguliers, entre un nœud de liaison de départ associé au point de départ et un nœud de liaison de destination associé au point de destination et au couloir de destination, et
- un module (30) de formation d'une trajectoire à partir des points de ladite succession de nœuds.

FIG.1

FIG.2

FIG.3

FIG.4

FIG.5

```
                              ┌──────────────────────────────┐ ⌐70
                              │ Initialisation distances      │
                              │ estimées D_est au point de    │
                              │ destination                   │
                              └──────────────────────────────┘
                                           │
                                           ▼
                              ┌──────────────────────────────┐ ⌐72
                              │ Sélection nœud n_pq de D_est  │◄──┐
                              │ minimale                      │   │
                              └──────────────────────────────┘   │
                                           │                      │
        ┌─────────┐ ⌐76                    ▼                      │
        │   Fin   │◄──O──◄  Condition fin ? ⌐74                   │
        └─────────┘                 │                             │
                                    N                             │
                                    ▼                             │
                              ┌──────────────────────────────┐ ⌐78│
                              │ Détermination point P         │   │
                              │ prédécesseur de Q             │   │
                              └──────────────────────────────┘   │
                                           │                      │
                                           ▼                      │
                              ┌──────────────────────────────┐   │
                        ┌────►│ Pour chaque voisin R de Q     │───⌐80
                        │     └──────────────────────────────┘
                        │                  │
                        │                  ▼
                        │     ┌──────────────────────────────┐ ⌐82
                        │     │ Calcul trajectoire (P,Q,R) et │
                        │     │ coût de transition            │
                        │     └──────────────────────────────┘
                        │                  │
                        │                  ▼
                        │     ┌──────────────────────────────┐ ⌐84
                        │     │ Calcul indice couloir C_qr et │
                        │     │ indice n_qr nœud R            │
                        │     └──────────────────────────────┘
                        │                  │
                        │                  ▼
                        │    N◄──◄ Condition distance ? ⌐86
                        │                  │
                        │                  O
                        │                  ▼
                        │     ┌──────────────────────────────┐ ⌐88
                        └─────│ Mise à jour nœud n_qr         │
                              └──────────────────────────────┘
```

**FIG.6**

Déterminer couloir S->D2    90

Couloir de destination?    92

O → Vers 62

N

Compteur <$C_{max}$?    94

N

O

Passer au prédécesseur suivant    96

Déterminer couloir N->D2    98

Couloir de destination?    100

N

O

Déterminer coût trajectoire    102

Mémoriser nœud de liaison de sortie    104

## FIG.7

# EP 4 660 736 A1

Europäisches Patentamt
European Patent Office
Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/025716 A1 (GIGOMAS LOÏC [FR] ET AL) 28 janvier 2021 (2021-01-28) * alinéas [0002], [0147], [0060], [0114]; figures 3,4a,4i * ----- | 1-10 | INV. G05D1/246 G05D1/46 |
| A | US 2008/091340 A1 (MILSTEIN IDO [IL] ET AL) 17 avril 2008 (2008-04-17) * alinéas [0028], [0115]; figures 1,3a, 3b, * ----- | 1-10 | |

**DOMAINES TECHNIQUES RECHERCHES (IPC)**

G05D

Le présent rapport a été établi pour toutes les revendications

| Lieu de la recherche | Date d'achèvement de la recherche | Examinateur |
|---|---|---|
| Munich | 2 octobre 2025 | Alesandrini, Bruno |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 18 0206

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2025

| Document brevet cité au rapport de recherche | Date de publication | Membre(s) de la famille de brevet(s) | Date de publication |
|---|---|---|---|
| US 2021025716 A1 | 28-01-2021 | EP 3770555 A1 | 27-01-2021 |
| | | FR 3099244 A1 | 29-01-2021 |
| | | US 2021025716 A1 | 28-01-2021 |
| US 2008091340 A1 | 17-04-2008 | CA 2553627 A1 | 28-07-2005 |
| | | CA 2553628 A1 | 28-07-2005 |
| | | EP 1709589 A2 | 11-10-2006 |
| | | EP 1709592 A1 | 11-10-2006 |
| | | US 2008091340 A1 | 17-04-2008 |
| | | US 2008132774 A1 | 05-06-2008 |
| | | US 2012288181 A1 | 15-11-2012 |
| | | WO 2005069223 A2 | 28-07-2005 |
| | | WO 2005069228 A1 | 28-07-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021025716 A1

- US 2008091340 A1

**Littérature non-brevet citée dans la description**

- **Z. ZHANG et al.** A novel real-time penetration path planning algorithm for stealth UAV in 3D complex dynamic environment. *IEEE Access*, July 2020

- **Z. WANG et al.** Enhanced sparse A* search for UAV path planning using Dubins path estimation. *2014, IEEE*